# EUROPEAN PATENT APPLICATION

(11) **EP 2 785 083 A1**
(43) Date of publication of application: **01.10.2014**
(21) Application number: 13305388.4
(22) Date of filing: 28.03.2013
(51) Int. Cl.: H04W 4/20, H04W 4/02

(54) **Improved wireless communication of private data between two terminals**

(71) Applicant: NEC Corporation, Minato-ku, Tokyo 108-8001 (JP)
(72) Inventor: Beaugrand, Fabrice, 92500 Rueil Malmaison (FR)
(74) Representative: Cabinet Plasseraud

(57) **Abstract**

The invention relates to a method for communicating private data between at least a first client device (CD1) and a second client device (CD2), wherein:
- one of the first and second client devices initiates a local network (LAN) to which the other of said first and second client devices connects,
- the first client device sends said private data (PD) through said initiated local network, selectively upon a predetermined condition, and the second client device receives said private data through the initiated local network, if the second client device respects said predetermined condition.

## Description

The present invention relates to a communication between at least two client devices, such as terminals (e.g. mobile phones, smartphones, tablets, etc.).

More particularly, the invention finds suitable applications for communication private pictures such as pictures, confidential work data, chat, media contents (video, pictures), etc.

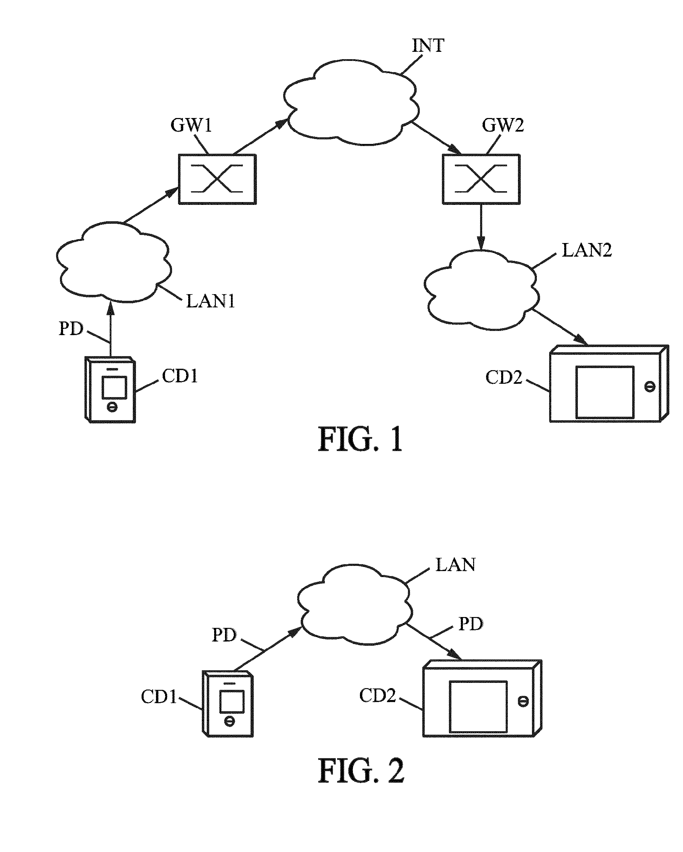

In fact, for communicating such private data, users of the aforesaid client devices can be reluctant to send such data through an extended network. For instance, when such users are in a same room, there is no need for the private data to travel along, as shown on figure 1:
- a first local network LAN1, to which is connected a first client device CD1 sending private data PD,
- a first gateway GW1 with an extended network such as the Internet INT,
- the extended network INT,
- one or several security servers SER,
- the extended network INT again,
- a second gateway GW2 between the extended network INT and a second local network LAN2, and
- the second local network LAN2, to which is connected a second client device CD2 intended to receive said private data PD.

In fact, the users of the client devices may feel unconfident with that kind of communication, while they are simply in a same room, or in two neighbour rooms of a same building. Moreover, that kind of communication can be time consuming also.

The present invention aims to improve the situation.

To that end, the present invention proposes first a method for communicating private data between at least a first client device and a second client device, wherein:
- one of the first and second client devices initiates a local network to which the other of said first and second client devices connects,
- the first client device sends said private data through said initiated local network, selectively upon a predetermined condition, and the second client device receives said private data through the initiated local network, if the second client device respects said predetermined condition.

Since the users of the client devices can be within a same room, the aforesaid condition can be for example a same visual gesture applied by both the users of the devices and sensed by sensors provided in the client devices.

Therefore, in an embodiment said predetermined condition comprises at least one gesture applied to said second client device and sensed by at least one sensor provided in said second client device.

For example, the aforesaid gesture can be an angle of the device relatively to the north direction, and the device sensor can be a magnetic sensor (such as compass, for example a gyrocompass).

In another embodiment, the aforesaid gesture can be an orientation of the device relatively to a vertical direction, and the device sensor can be thus a gyroscopic sensor (accelerometer).

In still another embodiment, the aforesaid gesture can be a shape drawn on a touchscreen of the device (e.g. a circle, or a wave, or a letter, or a direction from down to up in the screen by sliding a finger on the screen in that direction, etc.).

In an embodiment said gesture applied to said second client device is previously defined by a first gesture applied to said first client device, and at least one sensor is provided in said first client device to sense said first gesture.

For example, if the aforesaid gesture is an angle A1 of the first device relatively to the north direction, the gesture applied to the second device can be for example a function of said angle (for example that angle A1, plus 180°; e.g. A2=A1+180°).

If the aforesaid gesture is an orientation of the first device relatively to a vertical direction, the gesture applied to the second device can be for example a function of said orientation (for example the same orientation: both first and second devices standing up for example).

If the aforesaid gesture is a shape drawn on a touchscreen of the device (e.g. a circle, or a wave, or a letter, or a direction from down to up in the screen, etc.), the gesture applied to the second device can be for example a function of said drawn shape (for example the same circle, or the same wave, or the same letter, or an opposite direction, from up to down for example, respectively).

In an embodiment, upon a first gesture applied to said first client device, said first client device sends a message request over the local network, asking for an identifier on said local network (for example an IP address) of each client device sensing a second gesture corresponding to said first gesture (for example an angle A2 within a range from A1+170° to A1+190° ; or a same orientation relatively to a vertical direction within a predetermined range of 20° for example as a sensing tolerance ; or a same shape, etc.).

In that embodiment, upon reception of said request message from said first client device, at least said second device answers to said request message by sending over the local network a response message comprising an identifier of the second device and a value of a sensed gesture (for example the angle of the second device relatively to the north direction, or its orientation relatively to a vertical direction, or a recognized shape drawn on a touchscreen, etc.).

In an alternative embodiment, the request message comprises a value of the first gesture, and, upon reception of the request message, the second client device senses the second gesture and compares a value of the second gesture to the received value of the first gesture, and if the second gesture corresponds to the first gesture, then the second client device sends a response message to the first client device (the response message comprising an identifier on the local network of the second client device).

Moreover, upon reception of said response message from at least said second client device, the first client device sends thus said private data to each client device connected to the local network and having an identifier on the local network associated to a second gesture value corresponding to said first gesture (for example an expected angle or orientation within a tolerance range of 20 (or 40°) for example).

In an embodiment, in a case where several client devices send said response message (as "second" client devices) with second gesture values corresponding to said first gesture, the method can include a further step of discriminating said second client device among said several client devices, by testing a value of a fourth gesture asked to be applied on said several client devices and to be compared to a third gesture applied to said first device.

For example, the first and second gestures can be sensed thanks to a gyrocompass provided in the client devices (measuring a difference of orientations relatively to North of 180° for example), and said third and fourth gestures can be sensed thanks to another kind of sensor, such as an accelerometer for measuring a same position of the devices relatively to a vertical direction, for example.

Furthermore, the confirmation for effectively sending/receiving the private data can be conditioned to an application of corresponding gestures on said first and second client devices, as explained above (for example, a finger sliding in opposite directions detected by respective touchscreens of said first and second client devices).

Of course, the steps presented above for interpreting a gesture sensed on a client device and for sending/receiving associated messages and/or data can be performed thanks to the run of a computer program installed of said device.

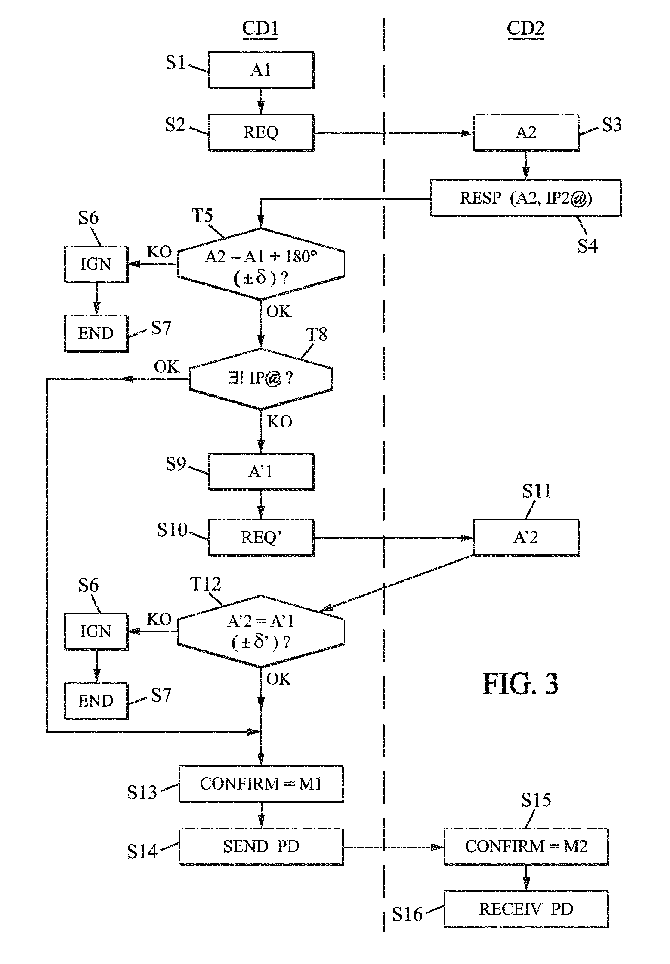

The present invention aims thus also at a computer program product, comprising instructions for performing the method according to the invention, when run by a processor. In an example of embodiment, the flow chart of Figure 3 commented below can illustrate a general algorithm of such a computer program product. The program product can be stored in a memory of the device or in any storage medium (CD ROM, USB Key, etc.) or downloadable through a network.

Furthermore, the invention aims also at a client device comprising means for performing a method according to the invention. The client device may thus comprise, at least:
- means for connecting the device to a local network,
- a gesture sensing unit generating a gesture signal,
- a processing unit for interpreting and converting the gesture signal into at least:
   - a message requesting addresses of devices connected to the local network and/or,
   - a message comprising a gesture value and identification data of the device in said local network.

The present invention is illustrated by way of example, and not by way of limitation, in the figures of the accompanying drawings, in which like reference numerals refer to similar elements and in which:
- Figure 1 shows schematically two client devices initiating a indirect communication link of the prior art;
- Figure 2 shows schematically two client devices initiating a direct wireless communication link through a local network, according to the invention;
- Figure 3 shows schematically steps performed by each of the two devices to share private data through the local network;
- Figures 4A, 4B, 4C show examples of gesture to be applied to the devices to perform the method according to the invention.

The invention finds suitable applications for example when establishing a direct connection between such terminals, for example through a direct wireless link (such as a Wifi communication, or Bluetooth, or NFC (for "Near Field Contact"), etc.).

For example, in the standard IEEE-802.11 (for a wireless local network), a basic service set (BSS) is a basic building block of a wireless local area network (LAN). In such an infrastructure, usually, a single access point together with all associated stations (client devices) is called a BSS. Usually, an access point acts as a master to control the stations within that BSS. The simplest BSS consists on one access point and one station. In an ad-hoc mode, a set of synchronized stations (one of which acts as a master) forms a BSS. In the standard 802.11, it is possible also to create an ad-hoc network of client devices, without a controlling access point, so as to obtain a system called an "independent basic service set" (IBSS).

Each BSS is uniquely identified by a so-called "basic service set identification" (BSSID). For a BSS operating in infrastructure mode, the BSSID is the MAC address (or IP address noted hereafter IP@) of the wireless access point (WAP). For an IBSS, the BSSID is a locally administered address (MAC or IP) usually generated from a random number.

An extended service set (ESS) is a set of one or more interconnected BSSs and integrated local area networks that appear as a single BSS to a logical link control layer at any station associated with one of those BSSs.

Each ESS is identified by a service set identifier (SSID). For an IBSS, the SSID is chosen by the client device that starts the network, and broadcasting of the SSID is performed by all devices that are members of the network.

Then, the local network LAN (as shown on figure 2) is established and private data PD can be safely transmitted from a first client device CD1 (a tablet or a smartphone or a mobile phone, etc.) to a second client device CD2 (another tablet or smartphone or mobile phone, etc.).

The condition to check before sending the private data can be a visual condition, since the two client devices are within a same restricted area such as a same room of a building for example. Then, such a visual condition can be a gesture (a movement for example) applied to the client devices and sensed by sensors included in the devices (gyrocompass, accelerometers, touchscreens, etc.).

However, another means that could be included in the devices for sensing the aforesaid visual condition, for people having their devices still in a same room, would be for example a face expression recognition system comprising:
- a camera to take a picture of the face of a user of one device, and
- a recognition computer module being able to recognize a smile or any grimace performed by the user (or a rising of an arm or a hand).

If the user of the second client device CD2 wince a same grimace as the user of the first client device CD1, then the first client device CD1 can send private data to the second client device CD2.

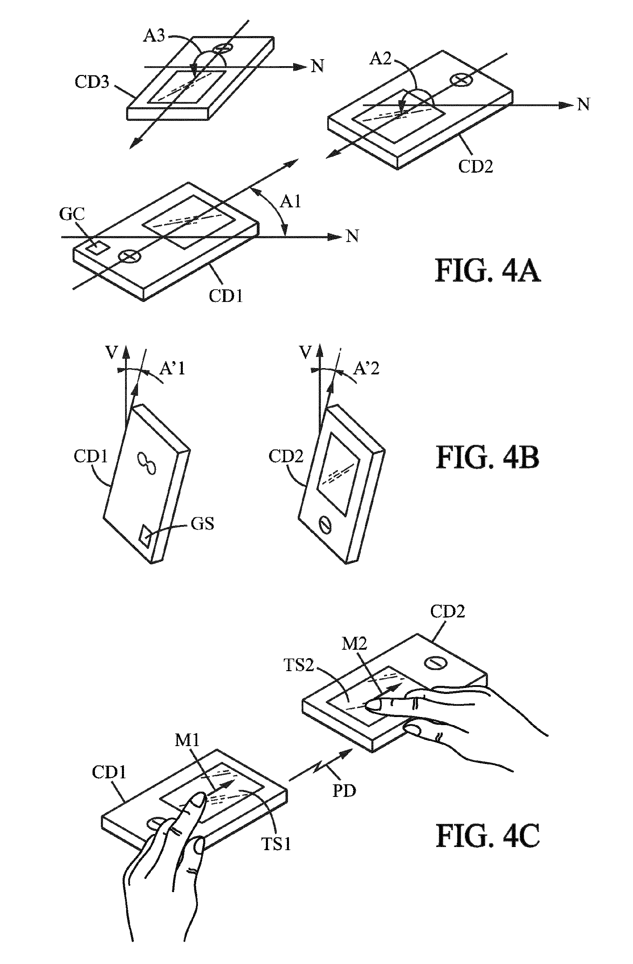

Referring now to figure 4A, in a particular embodiment, the first client device CD1 is handled by a user so as to apply a movement which can be defined, for example by an angle A1, with respect to north direction (arrow N) and chosen arbitrarily by the user of client device CD1. To that end, the device CD1 comprises at least one magnetic sensor GC (such as a gyrocompass) to sense the angle A1. Furthermore, other client devices CD2, CD3 comprise respective magnetic sensors such as a gyrocompass (not shown on figure 4A) to sense respective angles A2, A3, relatively to the north direction.

Now referring to figure 3, a user of client device CD1, willing to send private data to a user of client device CD2, handles his device CD1 so as to point a direction relatively to north forming an angle A1 as shown in figure 4A, and sensed by a gyrocompass GC (at step S1 of figure 3). To that end, a human/machine interface message can be popped on a screen of the client device CD1 to invite the user to point at a particular direction. Then, a request message REQ is sent over the local network LAN (in step S2 of figure 3) asking for the addresses of the client devices connected to the local network and which point at an opposite direction A1+180°. Each client device CD2 of the local network receiving the message REQ can then generate a human/machine interface message that can be popped on a screen of that client device CD2, indicating that the user of device CD1 is willing to send private data and inviting to that end the user of device CD2 to point device CD2 to device CD1 (e.g. pointing device CD2 at an opposite direction A1+180° relatively to north, as drawn on figure 4A). At step S3 of figure 3, the user of device CD2 points at a direction forming an angle A2 relatively to north (as shown in figure 4A) and, in an example of embodiment, client device CD2 sends a response message RESP including the value of the angle A2 and the address IP2@ of client device CD2 in the local network LAN (at step S4 of figure 3).

Upon reception of the message RESP from client device CD2, the first client device CD1 compares the angle value A2 to the angle value A1 (at test T5 of figure 3). To that end, the first client device CD1 comprises of course computing means such as, for example, a processor and a memory adequately programmed. If the angle A2 is out of a tolerance range from A1+180°-δ to A1+180°+δ (with δ=10 or 20 degrees for example), then the response message RESP is ignored in step S6 and the process can be ended at step S7, meaning that client device CD2 is not intended to receive private data from client device CD1 since the gesture applied to client device CD2 does not correspond to the one applied to client device CD1.

An alternative embodiment can consist on checking the value A2, at the second client device CD2, thanks to its comparison with the value A1 which can be received from the first client device CD1 along with the request message REQ. In this embodiment, the message REQ includes the angle value A1 sensed by the first device CD1 and a request to sense a corresponding angle A2. Then, any client device sensing a corresponding angle A2 (e.g. between A1+180°-δ and A1+180°+δ) sends a response message RESP with its IP address to client device CD1. This alternative embodiment can be advantageous since it makes it possible to reduce the number of messages sent over the local network.

Referring again to figure 3, if the angle A2 is otherwise within the tolerance range given above (arrow OK from test T5), meaning that the gesture applied to client device CD2 corresponds to the one applied to client device CD1, then the method is optionally continued by checking (in test T8) whether a single client device CD2 answers to the request message REQ or if several devices CD2, CD3 are answering to that message REQ, which can mean that an intruder CD3 is trying also to obtain private data from client device CD1.

Referring now to figure 4B, in an embodiment, the first client device CD1 is handled by a user so as to apply a movement which can be defined, for example by an angle A'1, with respect to a vertical direction (arrow V). To that end, the device CD1 comprises at least one gravity sensor GS (such as an accelerometer) to sense the angle A'1. Furthermore, other client devices CD2, CD3 comprise respective gravity sensors such as accelerometers (not shown on figure 4B) to sense respective angles A'2, A'3, relatively to the vertical direction V. For example, the user of device CD1 can choose the angle A'1 to correspond to the vertical direction V (the client device CD1 standing upright). Therefore, the user of client device CD1 can see users applying the same gesture on their device CD2, CD3 since they are all in a same room for example. If private data are not intended to one of these users, the user of client device CD1 can stop the process and refuse to send the private data. On the opposite, if the only one device CD2 to stand upright is the one of the user intended to receive the private data, then the user of client device CD1 can confirm the transmission of the private data.

Therefore, referring again to figure 3, at step S9, the user of client device CD1 handles his device CD1 so as to stand it up upright for example, defining thus an angle A'1 (with A'1=0 in that example), and sensed by a gravity sensor GS. To that end, a human/machine interface message can be popped on a screen of the client device CD1 to invite the user to handle the device CD1 so as to point at an up vertical direction. Then, a request message REQ' is sent over the local network LAN (in step S10 of figure 3) asking for the addresses of the client devices connected to the local network and which point at a same direction A'1. Each client device CD2 of the local network receiving the message REQ can then generate a human/machine interface message that can be popped on a screen of that client device CD2, indicating that the user of device CD1 is still willing to send private data and inviting to that end the user of device CD2 to point device CD2 at a same direction A'1. At step S11 of figure 3, the user of device CD2 points at a direction forming a real angle A'2 relatively to the vertical direction V (as shown in figure 4B) and, in an example of embodiment, client device CD2 sends the sensed value A'2 to client device CD2.

Upon reception of a value A'2 from client device CD2, the first client device CD1, compares the angle value A'2 to the angle value A'1 (at test T12 of figure 3). If a received angle value A'3 is not equal to the angle A'1 for example (within a tolerance range ±δ'), then the address IP3@ of client device CD3 is ignored from the possible recipients of the private data in step S6 and the process can be ended for that device CD3, at step S7 explained above, meaning for example that device CD3 was pointing direction A1+180°±δ by chance. Here also, the comparison between the angles A'1 and A'2 can be performed at the second client device CD2 (if each device receives from the first client device CD1 the angle value A'1 to check A'2 with A'1).

Otherwise, if the angle A'2 is within the tolerance range A'1±δ' (arrow OK from test T12), meaning that the gesture applied to client device CD2 corresponds to the one applied to client device CD1, then the method is optionally continued by checking (in step S13) whether the user of client device CD1 confirms that the private data shall be sent indeed to client data CD2. To that end, a pop up message can be displayed on a screen of client device CD1 asking the user of client device CD1 to confirm the transmission of private data to the user of client device CD2 identified by its address IP2@. The private data to be sent have been previously selected by the user of client device CD1 and a corresponding item is shown in that human message/interface message (for example: *"Do you confirm the transmission of picture #n to Mr X* ?" (or "*to client device having a telephone number 06 XXXX'* or *"to client device having an IP address XXXX'*)). In an exemplary embodiment, the message can be:
*"If you do confirm the transmission of picture #n to Mr X, please slide your finger up on the touchscreen"* (or *"please draw a circle"* or "*a square"* or *"a wave",* etc.). The gesture to perform on the touchscreen TS1 of client device CD1 (see figure 4C) can be randomly selected among several gestures (e.g. simple drawings to design on the touchscreen such as a circle, a square, a wave, a line, etc.): the users of client devices CD1 and CD2 have to draw the same shape, to confirm the transmission and respectively the reception of private data. A slightly alternative embodiment is shown however in figure 4C, commented below.

Of course, if a single client device CD2 has sent a right angle orientation relatively to north at step S4 (arrow OK at the output of test T8), then, there is not any need to carry out steps S9 to T12.

Referring to figure 4C, the gesture to apply to the touchscreen TS1 of client device CD1 is a sliding of a finger in an up direction of the device (arrow M1), to confirm the transmission of the private data PD. Symmetrically, the gesture to apply to the touchscreen TS2 of client device CD2 is a sliding of a finger in an down direction of the device (arrow M2), to confirm the downloading of the private data PD in the client device CD2. In this particular embodiment, the gestures M1 and M2 are predetermined (and not chosen by random). That embodiment allows the user of client device CD1 to send data PD and to see who receives them finally.

Therefore, referring again to figure 3, after test T12 (or test T8), a step S13 asking the user of client device CD1 to confirm the transmission of the selected private data PD is carried out and if the gesture M1 applied to the touchscreen TS1 is duly recognized by the client device CD1, then the private data are sent at step S14 to client device CD2. In step S15, a confirmation of downloading durably the private data received from client device CD1 is asked to the user of client device CD2 (e.g. a durable storage of the received private data in a ROM memory, typically). To confirm, the user of client device CD2 applies the gesture M2 on the touchscreen TS2 of client device CD2. Then, the received private data PD are downloaded in client device CD2 at step S16.

Of course, the present invention is not limited to the description provided above as an example of embodiment; it encompasses possible variants.

For example, the different steps of sensing gestures in figure 3 can be exchanged. The request of the addresses REQ can be initiated after a detection of an angle A'1 relative to a vertical direction V, while the determination of a unique device answering to that request (steps S9 and S10) can be performed by sensing an angle A1 relatively to north.

More generally, the invention can be implemented with other sensors, without any restriction to a motion or to a gesture applied to the device. Furthermore, as explained above, the use of the camera can be contemplated also to detect a visual condition before sending private data.

It will be understood further that steps T8 to S13 and step S15 of figure 3 are optional. In fact, a single test of one gesture (for example a pointed direction relatively to north) is sufficient to impose the condition for sending/receiving private data according to the invention.

More generally, the steps S1 and/or S9, for defining the gesture on the first client device CD1, are optional. In fact, the corresponding steps S3, S11, performed on the second client device can be sufficient to define the condition before sending the private data. For example, the user of the first device CD1 can ask the user of the second device CD2 to point his device CD2 at north direction for example and if, in test T5, the direction pointed by the device CD2 is indeed north direction, then the first client device CD1 can transmit private data to the second client device CD2.

Furthermore, in an alternative of the embodiment where the angle A2 should be equal to A1+180°, the angle A2 can simply be equal to A1 (e.g. both the two devices CD1 and CD2 point at a same direction).

Moreover, the invention is not limited to an embodiment specifically related to a Wifi network connection. For example, it can be applied also to connect at least two devices through a Bluetooth communication link, or through any other kind of wireless communication link.

## Claims

1. A method for communicating private data between at least a first client device and a second client device, wherein:
- one of the first and second client devices initiates a local network to which the other of said first and second client devices connects,
- the first client device sends said private data through said initiated local network, selectively upon a predetermined condition, and the second client device receives said private data through the initiated local network, if the second client device respects said predetermined condition.

2. The method of claim 1, wherein said predetermined condition comprises at least one gesture applied to said second client device and sensed by at least one sensor provided in said second client device.

3. The method of claim 2, wherein said gesture is an angle of the second device relatively to the north direction, said sensor comprising a magnetic sensor.

4. The method of anyone of claims 2 and 3, wherein said gesture is an orientation of the second device relatively to a vertical direction, said sensor comprising an accelerometer.

5. The method of anyone of claims 2 to 4, wherein said gesture is a shape drawn on a touchscreen of the device, said sensor comprising a touchscreen.

6. The method of anyone of claims 2 to 5, wherein said gesture applied to said second client device is previously defined by a first gesture applied to said first client device, and at least one sensor is provided in said first client device to sense said first gesture.

7. The method of claim 6, taken in combination with claim 3, wherein said gesture applied to the first client device comprises pointing the first client device at a direction forming an angle A1 relatively to the north direction, and the gesture to be applied to the second device to fulfil said condition comprises pointing the second client device at a direction forming an angle A2 relatively to the north direction, such that A2=A1+180°, within a predetermined tolerance range.

8. The method according to anyone of the preceding claims, wherein, upon a first gesture applied to said first client device, said first client device sends a message request over the local network, asking for an identifier on said local network of each client device sensing a second gesture corresponding to said first gesture.

9. The method of claim 8, wherein, upon reception of said request message from said first client device, at least said second device answers to said request message by sending over the local network a response message comprising an identifier of the second device and a sensed value of a gesture.

10. The method of claim 8, wherein said request message comprises a value of said first gesture, and, upon reception of said request message, said second client device senses said second gesture and compares a value of said second gesture to the value of the first gesture, and if the second gesture corresponds to said first gesture, then, the second client device sends a response message to said first client device, said response message comprising an identifier on said local network of the second client device.

11. The method of claim 8 or claim 9, wherein, upon reception of said response message from at least said second client device, the first client device sends said private data to at least one client device connected to the local network and having an identifier on the local network associated to a second gesture value corresponding to said first gesture.

12. The method of anyone of claims 8 to 10, wherein, in a case where several client devices send said response message with second gesture values corresponding to said first gesture, the method includes further a step of discriminating said second client device among said several client devices, by testing a value of a fourth gesture asked to be applied on said several client devices and to be compared to a third gesture applied to said first device.

13. The method of claim 12, wherein said third and fourth gestures are sensed by respective accelerometers for measuring respective positions of said first and second devices relatively to a vertical direction.

14. The method according to anyone of the preceding claims, wherein a confirmation for effectively sending/receiving the private data is further conditioned to an application of corresponding gestures on said first and second client devices, detected by respective touchscreens of said first and second client devices.

15. A computer program product, comprising instructions for performing the method according to anyone of the preceding claims, when run by a processor.

16. A client device comprising means for performing a method according to anyone of claims 1 to 14.
